(19) Europäisches Patentamt
European Patent Office
Office européen des brevets

(11) Veröffentlichungsnummer : **0 071 079**
**B1**

(12) **EUROPÄISCHE PATENTSCHRIFT**

(45) Veröffentlichungstag der Patentschrift : **03.04.85**

(51) Int. Cl.[4] : **C 07 F 7/18**// C08K5/54

(21) Anmeldenummer : **82106282.5**

(22) Anmeldetag : **14.07.82**

(54) **Verfahren zur Herstellung von 2-Trimethylsilyloxy-ethylaminen.**

(30) Priorität : **24.07.81 DE 3129272**

(43) Veröffentlichungstag der Anmeldung : **09.02.83 Patentblatt 83/06**

(45) Bekanntmachung des Hinweises auf die Patenterteilung : **03.04.85 Patentblatt 85/14**

(84) Benannte Vertragsstaaten : **BE CH DE FR GB LI NL**

(56) Entgegenhaltungen :
**DE-A- 2 722 118**
**DE-B- 1 157 228**
**COMPTES RENDUS HEBDOMADAIRES DES SEANCES DE L'ACADEMIE DES SCIENCES, Band 265, Nr. 9, Serie C, 28. August 1967, Seiten 516-518**
**CHEMICAL ABSTRACTS, Band 71, Nr. 11, 15. September 1969, page 411, no. 50058m, Columbus, Ohio, USA**
**THE JOURNAL OF ORGANIC CHEMISTRY, Band 25, Nr. 9, 7. September 1960, Seiten 1658-1660, The American Chemical Society**
**EUGEN MÜLLER: "Methoden der organischen Chemie", Band XI/1, Seiten 571-574, Georg Thieme Verlag, Stuttgart, DE.**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Findeisen, Kurt, Dr.**
**In der Follmuehle 10**
**D-5068 Odenthal 2 (DE)**
Erfinder : **Ziemann, Heinz, Dr.**
**Am Wiesenberg 10**
**D-5653 Leichlingen (DE)**

**EP 0 071 079 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von in 2-Stellung substituierten 2-Trimethylsilyloxyethylaminen, die durch Hydrolyse leicht in die entsprechenden 2-Hydroxyethylamine überführt werden können. Die 2-Trimethylsilyloxyethylamine sind teilweise neu.

Die Reduktion von Cyanhydrinen der Aldehyde und Ketone, die als leicht zugängliche Verbindungen potentielle Ausgangsmaterialien zur Herstellung einer Vielzahl homologer, z. T. pharmakologisch interessanter, 2-Hydroxyethylamine sind, bereitet in vielen Fällen erhebliche Schwierigkeiten, was sowohl für die chemische Reduktion als auch für die katalytische Hydrierung von Cyanhydrinen (1-Hydroxynitrilen) gilt. Die Schwierigkeiten sind vor allem darauf zurückzuführen, daß die Addukte aus Cyanwasserstoff und Carbonylverbindungen, besonders ausgeprägt im alkalischen pH-Bereich, im Gleichgewicht mit den Ausgangsstoffen vorliegen, deren Anwesenheit zur Bildung unerwünschter Nebenprodukte oder bei der katalytischen Hydrierung zur Vergiftung der Katalysatoren durch Cyanwasserstoff führt (Houben-Weyl, Methoden der organischen Chemie, Band XI/1, Seite 571 ff (1957) und Band VI/1c Seite 133 (1976)).

Bei den bekannten Verfahren für die katalytische Hydrierung von 1-Hydroxy-nitrilen (Helv. 30, 1441 (1947), Am. Soc. 82, 4099 (1960), C.A. 67, 53293 (1967), J. Org. Chem. 25, 1658 (1960)) werden Platin- oder Palladium-Katalysatoren verwendet. In den bekannten Fällen sind hohe Katalysatormengen und lange Reaktionszeiten erforderlich.

Der Grundkörper der Verbindungsklasse der 2-Trimethylsilyloxy-ethylamine, das 2-Trimethylsilyloxyethylamin, ist bekannt (Z. Obsc. Chem. 39, (1969) Nr. 7, Seiten 1462-1467). Es wird in aufwendiger Weise aus 2 Mol Ethanolamin und 1 Mol Trimethylsilylchlorid hergestellt. Als Nebenprodukte entstehen O,N-silylierte Derivate.

Aufgabe der Erfindung ist es ein neues, von Aldehyden oder Ketonen ausgehendes Verfahren zur Herstellung von in 2-Stellung substituierten 2-Trimethylsilyloxy-ethylaminen zu entwickeln und damit Ausgangsprodukte für eine verbesserte und wirtschaftlich vertretbare Herstellung von in 2-Stellung substituierten 2-Hydroxyethylaminen in industriellem Maßstab zur Verfügung zu stellen.

Es wurde ein Verfahren zur Herstellung von 2-Trimethylsilyloxy-ethylaminen der Formel (I)

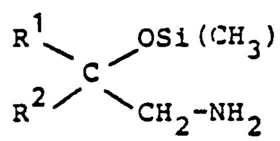

(I)

in der $R^1$ und $R^2$ gleich oder verschieden sind und Wasserstoff, Alkyl mit 1 bis 18 Kohlenstoffatomen, Alkenyl mit 2 bis 12 Kohlenstoffatomen, Cycloalkyl und Cycloalkenyl mit je 3 bis 10 Kohlenstoffatomen oder Aryl mit bis zu 14 Kohlenstoffatomen bedeuten oder gemeinsam durch Verknüpfung über Methylen und gegebenenfalls Imino- oder Oxo-Gruppen für einen 5- oder 6-gliedrigen Ring stehen, gefunden, das dadurch gekennzeichnet ist, daß man in 2-Stellung substituierte 2-Trimethyl-silyloxy-nitrile der Formel (II)

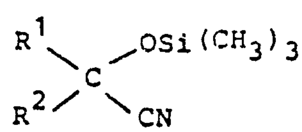

(II)

in der $R^1$ und $R^2$ die obengenannte Bedeutung haben,
in Gegenwart eines Hydrierkatalysators im Temperaturbereich von 20 bis 150 °C bei einem Wasserstoffdruck von 10 bis 250 bar mit Wasserstoff umsetzt.

Durch das erfindungsgemäße Verfahren lassen sich die 1-Trimethylsilyloxy-nitrile mit geringem Katalysatoraufwand und unerwartet selektiv zu den in 2-Stellung substituierten 2-Trimethylsilyloxyethylaminen umsetzen, die sich durch saure Hydrolyse leicht in entsprechend substituierte 2-Hydroxyethylamine überführen lassen. Überraschenderweise treten hierbei keine Komplikationen auf, wie es bei katalytischen Hydrierungen von Cyanhydrinen der Fall ist, obwohl mit der Bildung von Cyanwasserstoff durch Hydrogenolyse der Ausgangsstoffe zu rechnen war.

Das erfindungsgemäße Verfahren kann mit Hilfe der folgenden Gleichung erläutert werden :

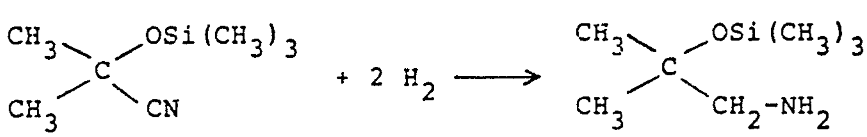

Alkyl kann erfindungsgemäß ein geradkettiger oder verzweigter Kohlenwasserstoffrest mit 1 bis 18,

bevorzugt 1 bis 12 Kohlenstoffatomen sein. Insbesondere bevorzugt ist der Niederalkylrest mit 1 bis 6 Kohlenstoffatomen. Beispielswéise seien die folgenden Alkylreste genannt: Methyl, Ethyl, Propyl, Isopropyl, Butyl, Isobutyl, Pentyl, Isopentyl, Hexyl und Isohexyl.

Alkenyl kann erfindungsgemäß ein geradkettiger oder verzweigter ungesättigter Kohlenwasserstoffrest mit 2 bis 12, bevorzugt 2 bis 8 Kohlenstoffatomen, insbesondere bevorzugt wird der Niederalkenylrest mit 2 bis 6 Kohlenstoffatomen, sein.

Beispielsweise seien die folgenden Alkenylreste genannt : Vinyl, Allyl, Isopropenyl, Butenyl, Isobutenyl, Pentenyl, Isopentenyl, Hexenyl und Isohexenyl.

Cycloalkyl kann erfindungsgemäß ein cyclischer Kohlenwasserstoffrest mit 3 bis 10, bevorzugt 5 ober 6, Kohlenstoffatomen sein. Beispielsweise seien die folgenden Cycloalkylreste genannt : Cyclopropyl, Cyclobutyl, Cyclopentyl und Cyclohexyl.

Cycloalkenyl kann erfindungsgemäß ein ungesättigter cyclischer Kohlenwasserstoffrest mit 3 bis 10, bevorzugt 5 oder 6 Kohlenstoffatomen sein. Beispielsweise seien die folgenden Cycloalkenylreste genannt : Cyclopentenyl und Cyclohexenyl.

Aryl kann erfindungsgemäß ein aromatischer Kohlenwasserstoffrest mit 6 bis 14 Kohlenstoffatomen sein. Beispielsweise seien Phenyl, Biphenyl und Naphthyl genannt.

Es ist auch möglich, daß die beiden Reste $R^1$ und $R^2$ gemeinsam zu einem 5- oder 6-gliedrigen Ring verbunden sind, der gegebenenfalls Stickstoff- oder Sauerstoffatom enthalten kann.

Als Beispiele seien hier der Furan- und der Pyridinring genannt.

Die erfindungsgemäßen Reste können substituiert sein durch weitere Reste, die sich unter den erfindungsgemäßen Bedingungen nicht verändern. Bevorzugt seien hier die folgenden Reste genannt : Halogene wie Fluor und Chlor, Alkoxy, bevorzugt Niederalkoxy (1 bis 6 Kohlenstoffatome) wie Methoxy, Ethoxy, Propoxy, Isopropoxy, Butoxy, Isobutoxy, Pentoxy, Isopentoxy, Hexoxy und Isohexoxy, Carbalkoxy wie Carbmethoxy und Carbethoxy und Hydroxy.

Für das erfindungsgemäße Verfahren werden 2-Trimethylsilyloxy-nitrile der Formel (III)

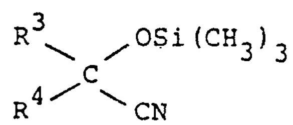

(III)

in der $R^3$ und $R^4$ gleich oder verschieden sind und Wasserstoff, Niederalkyl, Niederalkenyl, Cycloalkyl und Cycloalkenyl mit je 5 oder 6 Kohlenstoffatomen, Phenyl oder Naphthyl bedeuten oder gemeinsam durch Verknüpfung über Methylengruppen und gegebenenfalls einer Imino- oder einer Oxogruppe für einen 5- oder 6-gliedrigen Ring stehen, bevorzugt.

Die 2-Trimethylsilyloxy-nitrile für das erfindungsgemäße Verfahren können nach bekannten Methoden hergestellt werden (Chem. Ber. 106, 589 (1973)). Sie können beispielsweise durch Umsetzung von Aldehyden oder Ketonen mit Trimethylsilylcyanid hergestellt werden. Für die Herstellung besonders geeignete Aldehyde und Ketone sind beispielsweise : Formaldehyd, Acetaldehyd, Propionaldehyd, Butyraldehyd, Isobutyraldehyd, Aceton, Methylethylketon, Isopropylmethylketon, Cyclobutanon, Cyclopropanon, Cyclohexanon, 2-Methylcyclohexanon, Benzophenon und 2,2,6,6-Tetramethyl-piperidinon-4.

Das erfindungsgemäße Verfahren wird im Temperaturbereich von etwa 20 bis 150 °C und mit einem Wasserstoffdruck von 10 bis 250 bar durchgeführt. Bevorzugt arbeitet man im Temperaturbereich von etwa 30 bis 120 °C und insbesondere bevorzugt im Temperaturbereich von 25 bis 80 °C.

Es kann vorteilhaft sein, unter höherem Wasserstoffdruck im Bereich von 50 bis 200 bar und insbesondere bevorzugt im Bereich von 80 bis 120 bar zu arbeiten.

Das erfindungsgemäße Verfahren wird in Gegenwart eines Hydrierkatalysators durchgeführt. Hydrierkatalysatoren für das erfindungsgemäße Verfahren enthalten im allgemeinen ein Metall der VIII. Gruppe des Periodensystems nach Mendelejew und/oder Kupfer oder mindestens eines dieser Metalle in Kombination mit Vanadium, Chrom oder Mangan. Als Metalle der VIII. Gruppe des Periodensystems seien genannt : Eisen, Kobalt, Nickel, Ruthenium, Rhenium, Palladium, Osmium, Iridium und Platin.

Die genannten Metalle können im Katalysator in Form des elementaren Metalls oder in Form eines Hydroxids, Oxidhydrats oder Oxids vorliegen und zusammen mit einem inerten Trägermaterial zur Anwendung gelangen.

Beispiele für inerte Trägermaterialien sind synthetische und natürlich vorkommende, gegebenenfalls physikalisch oder chemisch veränderte Stoffe wie Aluminiumoxide, Kieselsäure, Kieselgur, Silikate, Aluminiumsilikate, Montmorillonite, Zeolithe, Spinelle, Kaolin, Ton, Magnesiumsilikat, Asbest, Bimsstein, Dolomit, Erdalkalicarbonate, Erdalkalisulfate, Zinkoxid, Zirkonoxid, Siliciumcarbid, Borphosphat, Aluminiumphosphat, Aktivkohle, Seide, Polyamide, Polystyrole, Polyurethane und Cellulose. Derartige Trägerkatalysatoren enthalten im allgemeinen etwa 1 bis 65 Gew.-%, vorzugsweise 5 bis 50 Gew.-%, der katalytisch aktiven Metalle, bezogen auf die Gesamtmasse des Trägerkatalysators. Die katalytisch aktiven Metalle können homogen im Trägermaterial verteilt oder bevorzugt in der äußeren Schicht oder auf der Oberfläche des Trägers abgelagert sein. Herstellung und Formgebung der Katalysatoren, die in dem

erfindungsgemäßen Verfahren Verwendung finden können, können in bekannter Weise erfolgen (R.L. Augustin, « Catalytic Hydrogennation », Marcel Dekker Inc., New York (1965) ; Chemical Engineering, *81*, 98, Heft Nr. 20 (1974)).

Trägerkatalysatoren in Form von Kugeln, Zylindern, Polygonen, Strängen, Fäden oder Fasern werden im allgemeinen für die kontinuierliche Durchführung des erfindungsgemäßen Verfahrens nach dem Festbettkatalysatorverfahren, insbesondere in der Rieselphase, bevorzugt, während trägerlose Katalysatoren oder Trägerkatalysatoren in pulverform für die diskontinuierliche Arbeitsweise in flüssiger Phase bevorzugt werden.

Für das erfindungsgemäße Verfahren werden Katalysatoren bevorzugt, die Nickel enthalten. Nickel kann hierbei alleine oder in Kombination mit mindestens einem der anderen o. g. Metalle in dem Katalysator enthalten sein. Beispielsweise seien die folgenden bevorzugten Katalysatoren genannt :

Katalysatoren von Raney-Typ, wie Raney-Nickel, Raney-Nickel-Eisen, Raney-Nickel-Kobalt und Raney-Nickel-Kupfer,

durch Reduktion von Nickelsalzen mit Zinkstaub, Alkalihydriden, Boranaten, Borwasserstoff, Metallalkylverbindungen oder Hydrazin hergestelltes metallisches Nickel, wie Urushibara-Nickel,

durch Reduktion von Nickeloxid oder Gemischen aus Nickeloxid und mindestens einem weiteren Metalloxid mit Wasserstoff hergestellte metallische Katalysatoren, wie Nickeloxid-chromoxid, Nickeloxidmanganoxid-kupferoxid, Nickeloxid-chromoxid-kupferoxid oder Trägerkatalysatoren, wie Nickel-auf-Kieselgur, Nickel-auf-Aluminiumoxid, Nickel-Kupfer-auf-Aluminiumoxid oder Nickel-Mangan-auf-Aluminiumoxid.

Die Katalysatoren können als Beschleuniger eines oder mehrerer der Elemente Lithium, Natrium, Kalium, Calcium, Barium, Silber, Gold, Beryllium, Lanthan, Cer, Vanadium, Niob, Tantal, Molybdän und Wolfram in Mengen bis zu 10 Gew.-%, bevorzugt bis zu 1 Gew.-%, bezogen auf das katalytisch aktive Metall enthalten.

Besonders bevorzugte Katalysatoren für das erfindungsgemäße Verfahren sind : Raney-Nickel mit mehr als 90 Gew.-% Nickel und weniger als 1 Gew.-% Eisen, Calcium und Natrium ; Raney-Nickel-Eisen mit 5 bis 30 Gew.-% Eisen und weniger als 1 Gew.-% Calcium und Natrium ; Raney-Nickel-Kobalt mit 5 bis 30 Gew.-% Kobalt ; Raney-Nickel-Kupfer mit 5 bis 20 Gew.-% Kupfer ; Nickel-Kupfer auf Kieselgur mit 5 bis 20 Gew.- Kupfer ; Nickel auf Kieselgur mit 50 bis 65 Gew.-% Nickel.

Zur Durchführung des erfindungsgemäßen Verfahrens können auch Gemische aus zwei oder mehreren der genannten Katalysatoren verwendet werden. Die Menge, in der der Katalysator oder das Katalysatorgemisch verwendet wird, kann in weiten Grenzen schwanken und richtet sich gewöhnlich nach der Art des Katalysators oder Katalysatorgemisches, den Reaktionsbedingungen und der verfahrenstechnischen Arbeitsweise. Im allgemeinen wird der Katalysator oder das Katalysatorgemisch in einer Menge, die 1 bis 100, bevorzugt 5 bis 50 Gew.-%, Metall entspricht, verwendet, wobei die Menge auf die Gewichtsmenge der eingesetzten 1-Trimethylsilyloxy-nitrile bezogen ist. Selbstverständlich werden Trägerkatalysatoren in entsprechender Menge verwendet, vorzugsweise in Mengen von etwa 1,5 bis 150, besonders bevorzugt 5 bis 75 Gew.-%, bezogen auf die Menge der eingesetzten 1-Trimethylsilyloxy-nitrile, Da die Katalysatoren mehrfach wiederverwendet werden können, sind auch hohe Katalysatorkonzentrationen durchaus wirtschaftlich.

Das erfindungsgemäße Verfahren kann in Abwesenheit eines Verdünnungsmittels in flüssiger Phase durchgeführt werden. Vorzugsweise wird die Umsetzung jedoch unter Verwendung eines Verdünnungsmittels durchgeführt. Als Verdünnungsmittel kommen alle unter den Reaktionsbedingungen inerten organischen Lösungsmittel in Frage, beispielsweise aliphatische und cycloaliphatische Kohlenwasserstoffe, wie Hexan, Heptan, Octan, Cyclohexan, Methylcyclohexan, Decalin ; aliphatische oder cyclische Ether, wie Diethylether, Dipropylether, Diisopropylether, Dibutylether, Dimethylbutylether, Methylbutylether, Ethylbutylether, Ethylenglykoldimethylether, 1,3-Dioxolan, 1,4-Dioxan, Tetrahydrofuran ; niedrige aliphatische Alkohole, wie Methanol, Ethanol, Propanol, Isopropanol, Butanol, Isobutanol, tert.-Butanol und Ethylenglykol ; Etheralkohole wie Diethylenglykol, Ethylenglykolmonomethylether, Ethylenglykolmonobutylether und Dipropylenglykol.

Es ist auch möglich, Gemische der genannten Verdünnungs- bzw. Lösungsmittel zu verwenden.

Bevorzugte Verdünnungs- bzw. Lösungsmittel für das erfindungsgemäße Verfahren sind cycloaliphatische Kohlenwasserstoffe, alicyclische Ether und niedrige aliphatische Alkohole. Insbesondere bevorzugt sind Cyclohexan, Methyl-cyclohexan, Methanol, Ethanol, Isopropanol, Tetrahydrofuran und 1,4-Dioxan.

Die Durchführung des erfindungsgemäßen Verfahrens kann in bekannter Weise als Sumpfphasenhydrierung in bekannten Hydrierapparaturen, wie Autoklaven, Röhrenreaktoren, Umlaufanlagen, z. B. Schlaufenreaktoren oder Autoklavenkaskaden, diskontinuierlich oder kontinuierlich erfolgen.

Es kann auch vorteilhaft sein, die Hydrierung in der Riesel- oder Gasphase an einem als Fließbett angeordneten, vorzugsweise stückigen Katalysator, kontinuierlich durchzuführen.

Das erfindungsgemäße Verfahren kann beispielsweise in einer einfachen Ausführungsform wie folgt durch geführt werden :

Man füllt einen Autoklaven mit dem Ausgangsmaterial, gibt den Katalysator und das Verdünnungsmittel hinzu und verschließt den Autoklaven. Man verdrängt danach die Luft in bekannter Weise durch Spülen mit Stickstoff und Wasserstoff und setzt den Autoklaven anschließend unter den gewählten

Wasserstoffdruck. Anschließend wird der Autoklav unter intensiver Rührung des Reaktionsgemisches auf die gewählte Reaktionstemperatur erhitzt.

Der Hydrierablauf läßt sich leicht durch Messung des Wasserstoffverbrauchs, der durch weitere Wasserstoffzufuhr ausgeglichen wird, verfolgen. Die Hydrierung ist beendet, wenn kein Wasserstoff mehr aufgenommen wird, wobei die aufgenommene Wasserstoffmenge etwa der theoretisch erforderlichen Wasserstoffmenge entspricht.

Die erforderliche Reaktionszeit ist je nach Ausgangsmaterial, Reaktionstemperatur, Wasserstoffdruck, Intensität der Durchmischung sowie auch Art und Menge des Katalysators verschieden ; im allgemeinen beträgt sie eine halbe bis mehrere Stunden.

Nach beendeter Hydrierung kann das Reaktionsgemisch in bekannter Weise aufgearbeitet werden, beispielsweise durch Abfiltrieren des Katalysators und gegebenenfalls Abdestillieren des Verdünnungsmittels. Das erhaltene rohe Hydrierungsprodukt enthält im allgemeinen nur geringe Mengen an Verunreinigungen und kann in üblicher Weise, beispielsweise durch Destillation oder Extraktion, gereinigt werden.

Nach dem erfindungsgemäßen Verfahren kann man vorteilhafterweise 2-Trimethylsilyloxy-ethylamine in hoher Ausbeute und Reinheit unter Verwendung handelsüblicher Katalysatoren in den technisch üblichen Reaktoren für die Druckhydrierung aus leicht zugänglichen Ausgangsmaterialien oder technischen Gemischen dieser Ausgangsmaterialien herstellen.

Dabei ist es überraschend, daß sich 1-Trimethylsilyloxynitrile vollständig und selektiv zu 2-Trimethylsilyloxyethylaminen umsetzen lassen, obwohl Komplikationen durch eine Vergiftung des Hydrierkatalysators zu erwarten waren.

Nach dem erfindungsgemäßen Verfahren können die neuen 2-Trimethylsilyloxy-ethylamine der Formel

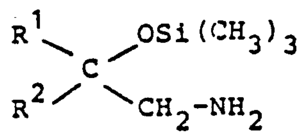

(IV)

in der $R^1$ und $R^2$ gleich oder verschieden sind und Wasserstoff, Alkyl mit 1 bis 18 Kohlenstoffatomen, Alkenyl mit 2 bis 12 Kohlenstoffatomen, Cycloalkyl und Cycloalkenyl mit je 3 bis 10 Kohlenstoffatomen oder Aryl mit bis zu 14 Kohlenstoffatomen bedeuten oder gemeinsam durch Verknüpfung über Methylen und gegebenenfalls Imino- oder Oxo-Gruppen für einen 5- oder 6-gliedrigen Ring stehen, wobei für den Fall, daß $R^1$ Wasserstoff bedeutet, $R^2$ von Wasserstoff verschieden ist, hergestellt werden.

Die nach dem erfindungsgemäßen Verfahren leicht zugänglichen 2-Trimethylsilyloxy-ethylamine können leicht mit verdünnten Säuren in 2-Hydroxy-ethylamine umgesetzt werden, die nach Houben-Weyl, Band XI/1, Seite 571 pharmakologisch interessante Verbindungen sind.

Außerdem sind die jetzt leicht zugänglichen 2-Trimethylsilyloxy-ethylamine Zwischenprodukte für die Synthese von Harnstoffen und Amiden mit einer geschützten Hydroxygruppe.

Die erfindungsgemäßen 2-Trimethylsilyloxy-ethylamine können ähnlich wie die aus der DE-OS 2 642 446 bekannten Verbindungen als Stabilisatoren und ähnlich wie die aus JA 55/018 409 bekannten Verbindungen als Lichtschutzmittel verwendet werden.

Die erfindungsgemäßen 2-Trimethylsilyloxy-ethylamine sind zur Synthese von Sympathomimetika, beispielsweise Octopamin (Ernst Mutschler, « Arzneimittelwirkungen », 4. Auflage, Wissenschaftliche Verlagsgesellschaft mbH, Stuttgart 1981) geeignet. Der Syntheseweg kann durch das folgende Reaktionsschema beschrieben werden :

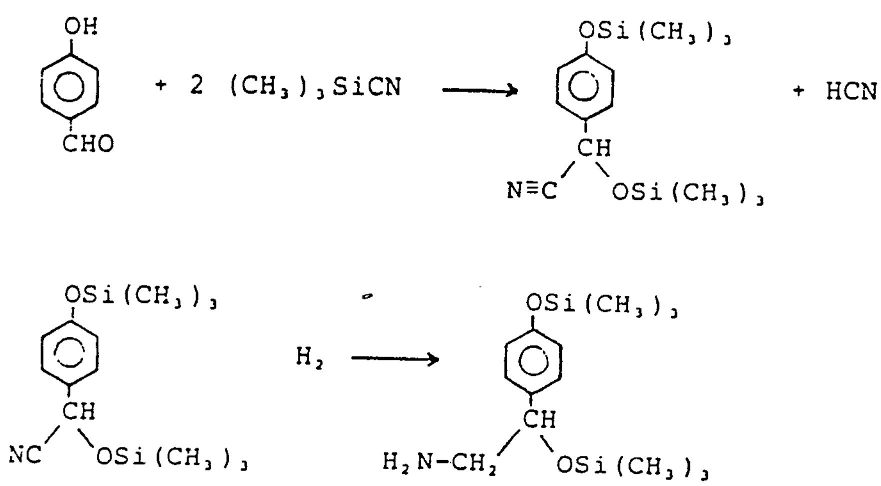

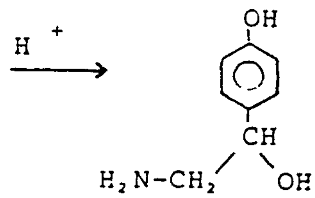


## Beispiel 1

171 g 1-Trimethylsilyloxy-2-methyl-buttersäurenitril (1 Mol) werden in 800 ml Dioxan gelöst und zusammen mit 35 g Raney-Nickel 5 Stunden bei 60 °C und 100 bar Wasserstoff in einem Autoklaven hydriert. Danach ist die Wasserstoffaufnahme beendet. Der Katalysator wird abfiltriert, das Lösungsmittel abdestilliert, der Rückstand fraktioniert.

Ausbeute : 143,5 g 2-Trimethylsilyloxy-3-methyl-butylamin (= 82 % der Theorie) ;

Sdp. : 68 bis 70 °C bei 18 mbar.

## Beispiel 2

197 g 1-Trimethylsilyloxy-1-cyano-cyclohexan (1 Mol) werden in 600 ml Tetrahydrofuran gelöst, mit 40 g Raney-Nickel versetzt und im Autoklav 3 Stunden bei 60 °C und 90 bar Wasserstoff hydriert. Der Katalysator wird nach beendeter Wasserstoffaufnahme entfernt, das Lösungsmittel abdestilliert, der Rückstand fraktioniert.

Ausbeute : 191 g 1-Trimethylsilyloxy-1-aminomethyl-cyclohexan (= 95 % der Theorie) ;

Sdp. : 100 bis 103 °C bei 18 mbar.

## Beispiele 3 bis 7

Die Herstellung erfolgt entsprechend Beispiel 2.

| Beispiel | Ausgangsprodukt | Endprodukt | Ausbeute (%) | Siedepunkt |
|---|---|---|---|---|
| 3 | 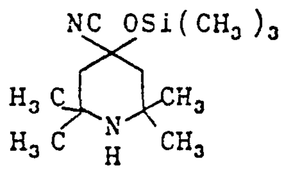 | 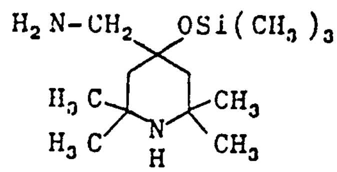 | 92 | 131-133°C b. 16 mbar |
| 4 | 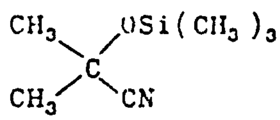 | 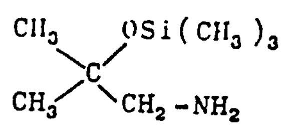 | 84 | 46-48°C b. 16 mbar |
| 5 | 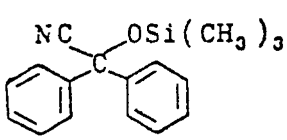 | 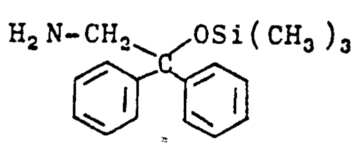 | 81 | 130-132°C b. 0,3 mbar |
| 6 | 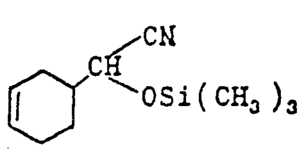 | 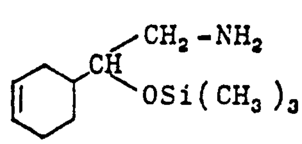 | 87 | 122-125°C b. 19 mbar |

(Fortsetzung)

| Beispiel | Ausgangsprodukt | Endprodukt | Ausbeute (%) | Siedepunkt |
|---|---|---|---|---|
| 7 | 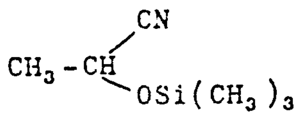 | 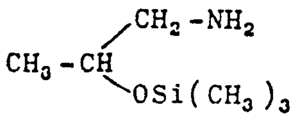 | 91 | 119–122°C |

### Beispiel 8

197 g 1-Trimethylsilyloxy-1-cyano-cyclohexan (1 Mol) werden in 700 ml Dioxan gelöst, mit 40 g $Ru/Al_2O_3$ versetzt und im Autoklav drei Stunden bei 130 °C und 140 bar Wasserstoff hydriert. Der Katalysator wird nach beendeter Wasserstoffaufnahme entfernt, das Lösungsmittel abdestilliert, der Rückstand fraktioniert.

Ausbeute : 170,9 g 1-Trimethylsilyloxy-1-aminomethyl-cyclohexan (= 85 % der Theorie) ;
Sdp. : 100-103 °C bei 18 mbar.

### Beispiel 9

197 g 1-Trimethylsilyloxy-1-cyano-cyclohexan (1 Mol) werden in 700 ml Dioxan gelöst, mit 40 g Ni-Chromit versetzt und im Autoklav drei Stunden bei 110 °C und 90 bar Wasserstoff hydriert. Der Katalysator wird nach beendeter Wasserstoffaufnahme entfernt, das Lösungsmittel abdestilliert, der Rückstand fraktioniert.

Ausbeute : 164,8 g 1-Trimethylsilyloxy-1-aminomethyl-cyclohexan (82 % der Theorie) ;
Sdp. : 100-103 °C bei 18 mbar.

## Ansprüche

1. Verfahren zur Herstellung von 2-Trimethylsilyloxy-ethylaminen der Formel

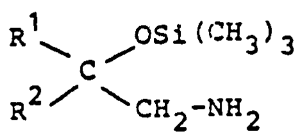

in der $R^1$ und $R^2$ gleich oder verschieden sind und Wasserstoff, Alkyl mit 1 bis 18 Kohlenstoffatomen, Alkenyl mit 2 bis 12 Kohlenstoffatomen, Cycloalkyl und Cycloalkenyl mit je 3 bis 10 Kohlenstoffatomen oder Aryl mit bis zu 14 Kohlenstoffatomen bedeuten oder gemeinsam durch Verknüpfung über Methylen und gegebenenfalls Imino- oder Oxo-Gruppen für einen 5- oder 6-gliedrigen Ring stehen, dadurch gekennzeichnet, daß man in 2-Stellung substituierte 1-Trimethylsilyloxy-nitrile der Formel

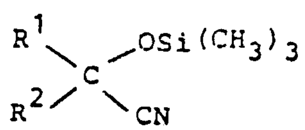

in der $R^1$ und $R^2$ die obengenannte Bedeutung haben, in Gegenwart eines Hydrierkatalysators im Temperaturbereich von 20 bis 150 °C bei einem Wasserstoffdruck von 10 bis 250 bar mit Wasserstoff umsetzt.

2. Verfahren nach Anspruch 1, dadurch gekennzeichnet, daß der Hydrierkatalysator mindestens ein Metall der VIII. Gruppe des Periodensystems nach Mendelejew und/oder Kupfer oder mindestens eines dieser Metalle in Kombination mit Vanadium, Chrom oder Mangan in metallischer und/oder oxidischer Form enthält.

3. Verfahren nach den Ansprüchen 1 und 2, dadurch gekennzeichnet, daß der Katalysator Nickel in metallischer und/oder oxidischer Form enthält.

4. Verfahren nach den Ansprüchen 1 bis 3, dadurch gekennzeichnet, daß der Katalysator in einer Menge verwendet wird, die 1 bis 100 Gew.-% Metall, bezogen auf die Menge des eingesetzten 1-Trimethylsilyloxy-nitrils, entspricht.

5. Verfahren nach den Ansprüchen 1 bis 4, dadurch gekennzeichnet, daß die Hydrierung im Temperaturbereich von 30 bis 120 °C durchgeführt wird.

6. Verfahren nach den Ansprüchen 1 bis 5, dadurch gekennzeichnet, daß die Hydrierung mit einem Wasserstoffdruck von 50 bis 200 bar durchgeführt wird.

7. Verfahren nach den Ansprüchen 1 bis 6, dadurch gekennzeichnet, daß die Hydrierung in Gegenwart von Verdünnungsmittel durchgeführt wird.

8. Verfahren nach den Ansprüchen 1 bis 7, dadurch gekennzeichnet, daß als Verdünnungsmittel cyclische Ether verwendet werden.

**Claims**

1. Process for the preparation of 2-trimethylsilyloxy-ethylamines of the formula

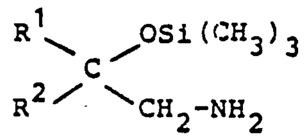

in which $R^1$ and $R^2$ are identical or different and denote hydrogen, alkyl with 1 to 18 carbon atoms, alkenyl with 2 to 12 carbon atoms, cycloalkyl or cycloalkenyl with in each case 3 to 10 carbon atoms or aryl with up to 14 carbon atoms or together, by linking via methylene and, optionally, imino or oxo groups, represent a 5- or 6-membered ring, characterised in that 1-trimethylsilyloxy-nitriles, which are substituted in the 2-position, of the formula

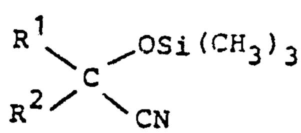

in which $R^1$ and $R^2$ have to above mentioned meaning,
are reacted with hydrogen in the presence of a hydrogenation catalyst in the temperature range of 20 to 150 °C under a hydrogen pressure of 10 to 250 bars.

2. Process according to Claim 1, characterised in that the hydrogenation catalyst contains at least one metal of group VIII of the periodic system according to Mendeleev and/or copper or at least one of these metals in combination with vanadium, chromium or manganese, in metallic and/or oxidic form.

3. Process according to Claims 1 and 2, characterised in that the catalyst contains nickel in metallic and/or oxidic form.

4. Process according to Claims 1 to 3, characterised in that the catalyst is used in a quantity which corresponds to 1 to 100 % by weight of metal, based on the quantity of 1-trimethylsilyloxy-nitrile used.

5. Process according to Claims 1 to 4, characterised in that the hydrogenation is carried out in the temperature range of 30 to 120 °C.

6 Process according to Claims 1 to 5, characterised in that the hydrogenation is carried out with a hydrogen pressure of 50 to 200 bars.

7. Process according to Claims 1 to 6, characterised in that the hydrogenation is carried out in the presence of a diluent.

8. Process according to Claims 1 to 7, characterised in that cyclic ethers are used as the diluents.

**Revendications**

1. Procédé de production de 2-triméthylsilyloxyéthylamines de formule

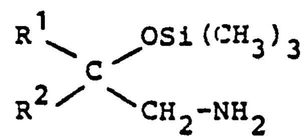

dans laquelle $R^1$ et $R^2$ sont égaux ou différents et représentent l'hydrogène, un groupe alkyle ayant 1 à 18 atomes de carbone, alcényle ayant 2 à 12 atomes de carbone, cycloalkyle et cycloalcényle ayant chacun 3 à 10 atomes de carbone ou aryle ayant jusqu'à 14 atomes de carbone ou forment ensemble un noyau pentagonal ou hexagonal par liaison par l'intermédiaire du groupe méthylène et, le cas échéant, de groupes imino ou oxo, caractérisé en ce qu'on fait réagir des 1-triméthylsilyloxynitriles substitués en position 2 de formule

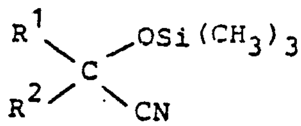

dans laquelle $R^1$ et $R^2$ ont la définition donnée ci-dessus, avec de l'hydrogène en présence d'un catalyseur d'hydrogénation dans un intervalle de température de 20 à 150 °C, sous une pression d'hydrogène de 10 à 250 bars.

2. Procédé suivant la revendication 1, caractérisé en ce que le catalyseur d'hydrogénation contient au moins un métal du Groupe VIII du Système Périodique de Mendeléef et/ou du cuivre ou au moins l'un de ces métaux en association avec du vanadium, du chrome ou du manganèse sous la forme métallique et/ou sous la forme d'oxyde.

3. Procédé suivant les revendications 1 et 2, caractérisé en ce que le catalyseur contient du nickel sous la forme métallique et/ou la forme d'oxyde.

4. Procédé suivant les revendications 1 et 3, caractérisé en ce que le catalyseur est utilisé en une quantité qui correspond à 1-100 % en poids de métal par rapport à la quantité du 1-triméthylsilyloxynitrile utilisé.

5. Procédé suivant les revendications 1 à 4, caractérisé en ce que l'hydrogénation est conduite dans l'intervalle de température de 30 à 120 °C.

6. Procédé suivant les revendications 1 à 5, caractérisé en ce que l'hydrogénation est conduite avec une pression d'hydrogène de 50 à 200 bars.

7. Procédé suivant les revendications 1 à 6, caractérisé en ce que l'hydrogénation est conduite en présence d'un diluant.

8. Procédé suivant les revendications 1 à 7, caractérisé en ce qu'on utilise comme diluants des éthers cycliques.